# EUROPÄISCHE PATENTSCHRIFT

(11) **EP 0 491 175 B1**
(45) Veröffentlichungstag und Bekanntmachung des Hinweises auf die Patenterteilung: **20.05.1998**
(21) Anmeldenummer: 91119674.9
(22) Anmeldetag: 19.11.1991
(51) Int. Cl.: B60H 3/06, B01D 53/04

(54) **Filter für eine Klima- oder Heizungsanlage für ein Kraftfahrzeug**
Filter for an air conditioning or heating system of a motor vehicle
Filtre pour une installation de climatisation ou de chauffage d'un véhicule automobile

(30) Priorität: 16.12.1990 DE 4040104
(43) Veröffentlichungstag der Anmeldung: 24.06.1992
(73) Patentinhaber: Behr GmbH & Co., D-70469 Stuttgart (DE)
(72) Erfinder: Damsohn, Herbert, Dr.-Ing., W-7307 Aichwald 2 (DE); Wolf, Walter, Dipl.-Ing., W-7155 Oppenweiler (DE)
(74) Vertreter: Dauster, Hanjörg, Dipl.-Ing.

(56) Entgegenhaltungen:
- EP-A- 211 177
- DE-A- 3 839 352
- DE-A- 3 902 546
- DE-U- 8 717 296

## Beschreibung

Die Erfindung betrifft einen Filter für eine Klima- oder Heizanlage für ein Kraftfahrzeug mit einem Filterkörper aus einem in mehreren Lagen angeordnetem Material mit offenen Poren, die mit kornförmigem Adsorptionsmittel, insbesondere Aktivkohle-Körnern, beschichtet sind, wobei der Filterkörper wenigstens auf seiner Luftaustrittsseite mit einem luftdurchlässigen, textilen Flächengebilde abgedeckt ist, in welchem die Abstände zwischen Fäden kleiner als die Abmessung des kornförmigen Adsorptionsmittels sind.

Filterkörper aus in mehreren Lagen angeordnetem Material mit offenen Poren sind beispielsweise aus dem DE-U-87 17 296.8, der DE-A-38 39 352 und der DE-A-39 02 546 bekannt. Aus der EP-A-0 211 177 ist es auch bekannt, einen derartigen Filterkörper mit einem textilen Flächengebilde abzudecken. Die Filterkörper werden in Gehäuse oder Kanäle eingesetzt. Da diese Filter als Geruchsfilter dienen, muß möglichst jede Bypass-Strömung im Bereich der Filterränder vermieden werden. Bei den bekannten Filtern werden deshalb an die Filterkörper in verschiedenster Weise Rahmen angeformt, die zur Abdichtung zu einem Gehäuse eingesetzt werden.

Der Erfindung liegt die Aufgabe zugrunde, ohne das Anformen eines Rahmens eine sichere Abdichtung zu ermöglichen.

Diese Aufgabe wird dadurch gelöst, daß die Ränder des Filterkörpers zusammen mit dem textilen Flächengebilde in einem mit fensterartigen Durchbrüchen versehenen Schacht eines Gehäuses eingesetzt sind, der den Filterkörper im Randbereich zusammendrückt und verformt.

Durch das Zusammendrücken und Verformen des Randbereiches des Filterkörpers wird eine sichere Abdichtung erhalten, so daß die Anwendung des Filters als Geruchsfilter ohne weiteres möglich ist.

In Ausgestaltung der Erfindung wird vorgesehen, daß in den Filterkörper ein Versteifungsgitter integriert ist. Zweckmässigerweise ist das Versteifungsgitter aus einem plastisch verformbaren Material, inbesondere Metall, hergestellt. Dadurch ist es möglich, den Filterkörper aus mehreren Lagen von Filtermaterial und dem Versteifungsgitter an gegebene Raumverhältnisse durch plastisches Verformen anzupassen.

In weiterer Ausgestaltung der Erfindung wird vorgesehen, daß das Versteifungsgitter parallel zu den Lagen angeordnet und mit in wengistens die anschließenden Lagen eindringenden Dornen versehen ist. Da Versteifungsgitter mit den Dornen und der zusätzlichen Umhüllung mit Gewebe, Gewerke und Gestricke führt dazu, daß der Filterkörper eine relativ hohe Formhaltigkeit besitzt, so daß er einfach und vor allen Dingen ohne die Gefahr von Beschädigungen und/oder ohne die Gefahr des Verschiebens der Lagen zueinander gehandhabt werden kann.

Weitere Merkmale und Vorteile der Erfindung ergeben sich aus der nachfolgenden Beschreibung der in der Zeichnung dargestellten Ausführungen und den Unteransprüchen.
- Fig. 1: zeigt einen Schnitt durch einen Filterkörper mit einem inneren Versteifungsgitter, das mit in die Lagen des Filterkörpers eindringenden Dornen versehen ist,
- Fig. 2: einen Querschnitt durch einen in einen Schacht oder einen Rahmen eines Gehäuses eingesetzten und dabei in dem Randbereich verformten Filterkörper, geschnitten entlang der Linie III-III der Fig. 3 und
- Fig. 3: einen Schnitt entlang der Linie IV-IV der Fig. 2 ohne Filterkörper.

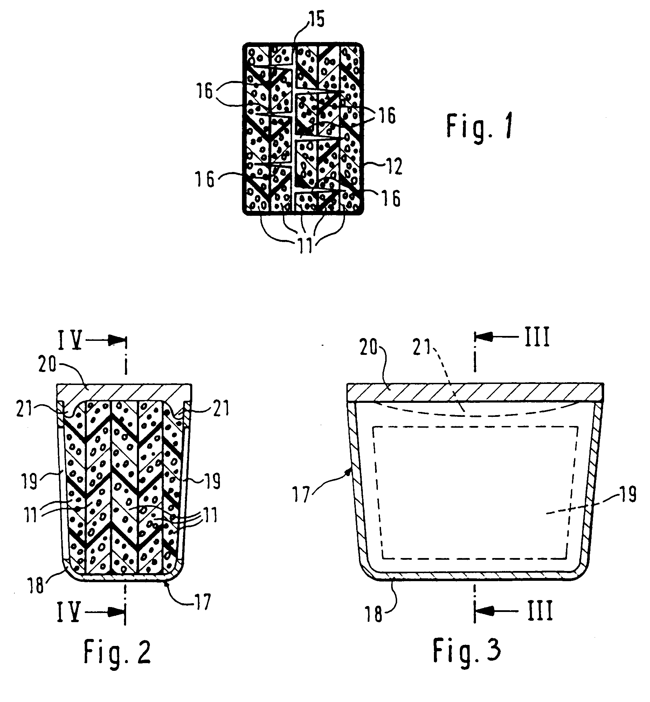

Das in Fig. 1 dargestellte Filter besteht aus fünf Lagen (11), die jeweils als aus einem Polyurethanschaum ausgeschnittene Platten ausgebildet sind. Der Polyurethanschaum besitzt offene Poren, deren Größe etwa 10 ppi bis 30 ppi (Poren per Inch) beträgt. Die Platten sind in dem Bereich der Poren mit einem Adsorptionsmittel beschichtet, insbesondere mit Aktivkohle-Körnchen. Der aus den plattenförmigen Lagen (11) gebildete Filterkörper kann eine beliebige Grundform aufweisen, beispielsweise eine runde oder eine rechteckige Grundform. Der Filterkörper aus den Platten (11) ist mit einem textilen Flächengebilde (12) strumpfartig umgeben, das aus einem Gewebe, Gewirke oder Gestricke gebildet werden kann. Dieses textile Flächengebilde (12) besteht aus Fäden, die untereinander einen Abstand einhalten, der kleiner als die Außenabmessungen des kornförmigen Adsorptionsmittels sind. Dadurch wird verhindert, daß sich eventuell von den Poren des plattenförmigen Filtermaterials lösende Aktivkohle-Körner aus dem Bereich des Filters ausgetragen werden.

Auf der Luftaustrittsseite ist das Filter mit einem nicht dargestellten Versteifungsgitter abgedeckt. Das Versteifungsgitter wird von dem textilen Flächengebilde mit umgeben. In Abwandlung der dargestellten Ausführungsform kann jedoch auch vorgesehen werden, daß das Versteifungsgitter außen auf dem textilen Flächengebilde (12) liegt. Selbstverständlich ist es auch möglich, ein vergleichbares Versteifungsgitter auch auf der Lufteintrittsseite anzuordnen oder Versteifungsgitter auf beiden Seiten anzuordnen.

Nach Fig. 1 besteht der Filterkörper aus insgesamt fünf Lagen (11) die als Platten aus Polyurethanschaum ausgeschnitten sind. Zwischen diesen Platten ist ein Versteifungsgitter (15) angeordnet, das parallel zu den Lagen (11) angeordnet ist und das mit nach beiden Seiten abragenden Dornen (16) versehen ist, die in die Lagen (11) nadelartig eindringen. Dieser Filterkörper ist von dem textilen Flächengebilde (12) umgeben, d.h. von einem Gewebe, Gewirke oder Gestricke. Dieser aus den Lagen (11) und dem Gitter (15) sowie dem strumpfartigen textilen Flächengebilde (12) gebildete Filterkörper bildet eine für sich transportfähige Baueinheit, da sowohl das textile Flächengebilde (12) als auch das Versteifungsgitter (15) mit den Dornen (16) für eine ausreichende Stabilität sorgen. Wenn für das textile Flächengebilde (12) relativ steife Fäden Verwendung finden, die unter Umständen auch aus dünnen Metalldrähten bestehen können, so kann alleine durch dieses textile Flächengebilde eine ausreichende Formsteifigkeit erhalten werden. Das textile Flächengebilde (12) kann darüber hinaus mit Spannung um den Filterkörper herumgewickelt und an seinen Randbereichen verklebt oder verschweißt o. dgl. werden.

Ein Filterkörper aus mehreren Lagen (11), der mit einem textilen Flächengebilde (12) umgeben ist, beispielsweise ein Filterkörper mit oder ohne Versteifungsgitter, ist entsprechend (Fig. 2 oder 3) in einen Schacht (17) eingesetzt. Der Schacht (17) besitzt ein Unterteil (18), dessen Längsseiten mit fensterartigen Durchbrüchen (19) versehen sind. Die Seitenwände und die Stirnwände dieses Unterteils (18) verjüngen sich von der offenen Seite zu der geschlossenen Seite hin, so daß der aus den Lagen (11) gebildete Filterkörper beim Einführen in den Schacht (17) in dem Randbereich zusammengedrückt und verformt wird, so daß in dem Randbereich eine sichere Abdichtung unter Vermeidung von Bypass-Öffnungen erhalten wird. Die offene Seite des Unterteils (18) ist durch einen Deckel (20) verschlossen, der mit umlaufenden Stegen (21), die in der Mitte ihre größte Höhe aufweisen, in das Unterteil (18) eindringt. Dadurch wird auch in diesem Bereich das Filtermaterial der äußeren Ränder der Lagen (11) zusammengedrückt, so daß auch dort eine sichere Abdichtung erhalten wird. Bei einer abgewandelten Ausführungsform sind die inneren Umfangsflächen des Schachtes (17) und ggf. auch die Innenfläche des Deckels (20) mit umlaufenden Rillen oder Rippen versehen, so daß eine Wirkung ähnlich der Wirkung einer Labyrinthdichtung erhalten wird.

## Patentansprüche

1. Filter für eine Klima- oder Heizanlage für ein Kraftfahrzeug mit einem Filterkörper aus einem in mehreren Lagen (11) angeordneten Material mit offenen Poren, die mit kornförmigem Adsorptionsmittel, insbesondere Aktivkohle-Körnern, beschichtet sind, wobei der Filterkörper wenigstens auf seiner Luftaustrittsseite mit einem luftdurchlässigen, textilen Flächengebilde (12) abgedeckt ist, in welchem die Abstände zwischen Fäden kleiner als die Außenabmessungen des kornförmigen Adsorptionsmittels sind, dadurch gekennzeichnet, daß die Ränder des Filterkörpers zusammen mit dem textilen Flächengebilde (12) in einen mit fensterartigen Durchbrüchen (19) versehenen Schacht (17) eines Gehäuses eingesetzt sind, der den Filterkörper im Randbereich zusammendrückt und verformt.

2. Filter nach Anspruch 1, dadurch gekennzeichnet, daß der Schacht (17) ein Unterteil (18) und einen Deckel (20) besitzt, wobei die Seitenwände und die Stirnwände des Unterteils (18) sich von einer offenen Seite hin zu einer geschlossenen Seite verjüngen.

3. Filter nach Anspruch 2, dadurch gekennzeichnet, daß der die offene Seite des Unterteils (18) verschließende Deckel (20) mit umlaufenden Stegen (21) in das Unterteil (18) eindringt.

4. Filter nach Anspruch 3, dadurch gekennzeichnet, daß die Stege (21) in der Mitte ihre größte Höhe aufweisen.

5. Filter nach einem der Ansprüche 1 bis 4, dadurch gekennzeichnet, daß das textile Flächengebilde (12) den Filterkörper strumpfartige umgibt.

6. Filter nach einem der Ansprüche 1 bis 5, dadurch gekennzeichnet, daß in den Filterkörper ein Versteifungsgitter (15) integriert ist.

7. Filter nach Anspruch 6, dadurch gekennzeichnet, daß das Versteifungsgitter (15) aus einem plastisch verformbaren Material, insbesondere Metall, hergestellt ist.

8. Filter nach Anspruch 6 oder 7, dadurch gekennzeichnet, daß das Versteifungsgitter (15) parallel zu den Lagen (11) angeordnet und mit mit in wenigstens die anschließenden Lagen eindringenden Dornen (16) versehen ist.

## Claims

1. Filter for an air-conditioning or heating unit in a motor vehicle, comprising a filter body made of a material with open pores, the said material being arranged in several layers, the pores being coated with a granular adsorption medium, in particular grains of activated carbon, wherein at least on its air outlet side the filter body is covered by an air-permeable surface covering (12) formed by a textile in which the distance between the threads is smaller than the particle dimensions of the granular adsorption medium,
**characterised in that**
the edges of the filter body together with the textile surface covering (12) are inserted into a shaft (17) of a housing, the said shaft having window-like openings (19) and compressing and squeezing the filter body inwards at its edges.

2. Filter according to claim 1,
**characterised in that**
the shaft (17) has a lower portion (18) and a lid (20), wherein the side and front walls of the lower portion (18) taper inwards from an open side towards a closed side.

3. Filter according to claim 2,
**characterised in that**
circumferential webs (21) on the lid (20) closing off the open side of the lower portion (18) project into the said lower portion (18).

4. Filter according to claim 3,
**characterised in that**
the webs (21) have their greatest height in the middle.

5. Filter according to claims 1 to 4,
**characterised in that**
the textile surface covering (12) envelops the filter body like a mantle.

6. Filter according to claims 1 to 5,
**characterised in that**
a stiffening lattice (15) is integrated into the filter body.

7. Filter according to claim 6,
**characterised in that**
the stiffening lattice (15) is made from a plastically deformable material, in particular metal.

8. Filter according to either of claims 6 to 7,
**characterised in that**
the stiffening lattice (15) is arranged parallel to the layers (11) and is provided with prongs (16) that penetrate at least into the layers adjacent to it.

## Revendications

1. Filtre pour une installation de climatisation ou de chauffage pour un véhicule automobile, comportant un corps de filtre formé d'un matériau comportant des pores ouverts et disposé selon plusieurs couches (11), les pores ouverts étant recouverts par un agent granulaire d'adsorption, notamment des grains de charbon actif, le corps de filtre étant recouvert au moins sur son côté de sortie de l'air, par une structure textile planiforme (12) perméable à l'air et dans laquelle les distances entre les fils sont inférieures aux dimensions extérieures de l'agent granulaire d'adsorption, caractérisé en ce que les bords du corps de filtre sont insérés, conjointement avec la structure plane textile (12), dans un conduit (17) d'un boîtier, qui est pourvu de traversées en forme de fenêtres et qui comprime et déforme le corps de filtre dans sa zone marginale.

2. Filtre selon la revendication 1, caractérisé en ce que le conduit (17) possède une partie inférieure (18) et un couvercle (20), les parois latérales et les parois frontales de la partie inférieure (18) se rétrécissant depuis un côté ouvert en direction d'un côté fermé.

3. Filtre selon la revendication 2, caractérisé en ce que le couvercle (20), qui ferme le côté ouvert de la partie inférieure (18), pénètre au moyen de barrettes circonférentielles (21) dans la partie inférieure (18).

4. Filtre selon la revendication 3, caractérisé en ce que les barrettes (21) possèdent au centre leur hauteur maximale.

5. Filtre selon l'une des revendications 1 à 4, caractérisé en ce que la structure textile planiforme (12) entoure le corps de filtre à la manière d'un bas.

6. Filtre selon l'une des revendications 1 à 5, caractérisé en ce qu'une grille de renfort (15) est intégrée dans le corps de filtre.

7. Filtre selon la revendication 6, caractérisé en ce que la grille de renfort (15) est formée d'une matière déformable plastiquement, notamment d'un métal.

8. Filtre selon la revendication 6 ou 7, caractérisé en ce que la grille de renfort (15) est disposée parallèlement aux couches (11) et comporte des broches (16) pénétrant au moins dans les couches contiguës.
